# EUROPEAN PATENT SPECIFICATION

(11) **EP 2 834 926 B1**
(45) Date of publication and mention of the grant of the patent: **09.06.2021**
(21) Application number: 12873718.6
(22) Date of filing: 05.04.2012
(51) Int. Cl.: H04B 10/25, H04W 92/14, H04B 10/2575

(54) **ARRANGEMENT IN A MOBILE NETWORK**
ANORDNUNG IN EINEM MOBILEN NETZWERK
DISPOSITION DANS UN RÉSEAU MOBILE

(43) Date of publication of application: 11.02.2015
(73) Proprietor: Telefonaktiebolaget LM Ericsson (publ), 164 83 Stockholm (SE)
(72) Inventor: LARAQUI, Kim, S-171 44 Solna (SE); DAHLFORT, Stefan, 164 80 Stockholm (SE); GHEBRETENSAÉ, Zere, S-142 62 Trångsund (SE); SALTSIDIS, Panagiotis, S-118 29 Stockholm (SE)
(74) Representative: Ericsson
(86) International application number: PCT/SE2012/050375
(87) International publication number: WO 2013/151472

(56) References cited:
- EP-A1- 0 368 673
- EP-A2- 1 263 258
- WO-A1-2011/053200
- US-A1- 2007 258 432
- US-A1- 2008 304 828
- US-A1- 2010 266 287

## Description

### Technical field

The present disclosure relates generally to an arrangement in a mobile network for connection of a site node to a central node.

### Background

The network solutions of today become more complex due to increase of services and equipment. Mobile site nodes and other types of access sites hold various equipment. The number of access technologies increases, typically today including GSM, GPRS, EDGE, 3G/WCDMA, LTE, WiFi, Wireless PAN (Personal Area Network) and other technologies from IEEE (Institute of Electrical and Electronics Engineers), just to name a few. Furthermore, the telecom operators operating the networks, require that different equipment from different vendors must be able to co-exist and to interoperate. A normal base station of today terminates a variety of networks and services, such as voice and data traffic. The equipment in a single site node may be supplied by different vendors, because an operator may want to enable competition between different vendors, or to equip the site node with the suitable equipment.

Furthermore, the increase of usage of mobile services, creates a need for higher capacity in mobile networks. One way to increase the capacity of a mobile network is to increase the capacity of existing site nodes by addition of base stations, antennas and radio unit equipment and corresponding bandwidth to the site nodes. Another way to provide higher capacity in the mobile network is to provide additional site nodes, and thereby create a higher density of the network.

The demand for higher bandwidth of mobile data services such as 3G/HSPDA and LTE, increases the need of high bandwidth in the so-called backhaul connection, i.e. the connection from a site node to a core network. The access technologies for connecting site nodes to a core network include wireless connections, various electrical cables and fiber optics. A general tendency is to optical connect site nodes to core networks, it is however today a fragmentation of access solutions.

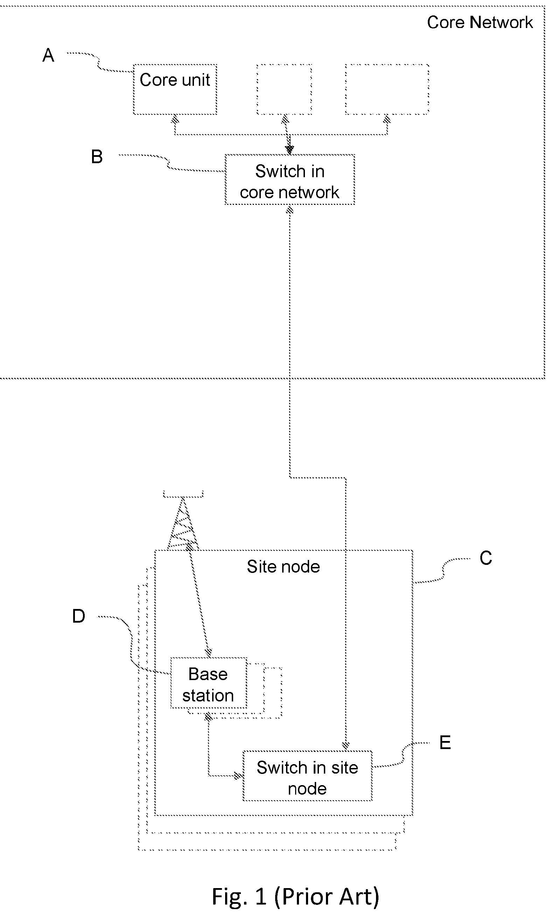

The growth of the number of base stations, as well as access technologies for termination of mobile devices has increased in the past and will continue to increase due to increasing traffic in the networks. This leads to not only an increased number of various kind of base station and radio units in the access network, but also a growth of equipment for operations and maintenance as well as for operation of the backhaul network itself. Normally a site node is connected via a switch or a router to the core network. An example is shown if Fig. 1. A typical backhaul connection in practice is redundant, i.e. the communication may go optional ways, if one connection for some reason breaks down. Furthermore, switches and/or routers that connect base stations to the core network also have the task to prioritize and shape the data traffic to and from a single base station. Furthermore, base stations may be cascade connected in rural areas, to minimize the cost of digging.

The cost of building and operation of mobile networks increases. The cost for increased bandwidth is justified by increased usage of services, which operators can charge consumers for. However, the cost for increased complexity is undesired by operators. The costs relate to operation and maintenance of the backhaul network, including switches and routers surveillance and repair/replacements, as well as configuration and re-configuration of these switches and routers.

US 2007/258432 A1 discusses a single wavelength bi-directional RoF link apparatus for converting downstream data received from an access point (AP), which is an upper layer, to an optical signal and transmitting the converted optical signal from a main donor existing in a central station (CS) to a remote optical repeater. Further, the apparatus converts upstream data received by the remote via an antenna to an optical signal and transmits the converted optical signal from the remote to the main donor.

US 2010/266287 A1 discusses a bandwidth allocation and management system for cellular communication networks. The system includes a master optical switch and processing station, a number of aggregation base stations that are in optical fiber communication with the master optical switching and processing station, and a number of auxiliary cellular base stations surrounded by and supported by each aggregation base station. A plurality of sets of neighboring base stations are each adapted to receive and process RF signals transmitted by cellular users within a broadcast and receive range and transmit the received RF signals received in analog form to the master optical switching and processing station. The master optical switching and processing station processes the RF signals and combine, for each user within the broadcast and receive range, the RF signals and converts the combined RF signals to digital form for transmission to other users in the communication network.

### Summary

It is an object of the invention to address at least some of the problems and issues outlined above. It is possible to achieve these objects and others by using an arrangement and nodes as defined in the attached independent claims.

According to one aspect, an arrangement in a network is provided, the arrangement comprising a site node arranged to comprise a base station, with the base station adapted for termination of wireless communication, where the site node comprises active network equipment, and a central node arranged to comprise a service unit, where the service unit is adapted for communication with the base station. The central node comprises a central switch unit which is adapted for switching of data between the base station and the service unit. The base station and the central switch unit are optically connected, thus enabling that communication is carried by light. The central switch unit comprises a virtual switch unit that replaces an active network equipment, among the active network equipment, located in the site node, where the virtual switch unit switches data between different units within the site node.

An advantage with the optical connection, between the base station and the central switch unit is redundancy of active equipment. Costly electric switches may be avoided in a site node, and thereby may the initial cost of acquisition and cost of operation and maintenance be avoided for switch units in site nodes. Another advantage is that configuration, operation and maintenance of an access network may be simpler, because such network related tasks may be concentrated to a central switch unit.

According to another aspect is a central switch unit in a central node for switching of data is provided. The central switch unit is adapted for switching of data between a base station and a service unit. The central switch unit has an interface for connection to the service unit and an interface for connection to the base station. The interface for connection to the base station is an optical interface for optical communication with the base station. The central switch unit comprises a virtual switch unit that replaces an active network equipment located in a site node, where the virtual switch unit switches data between different units within the site node.

An advantage with a central switch unit, is that a central switch unit may be arranged to handle in principle all switching related to both a central node and a site node. Thus may the central switch unit make any site node located switch unit redundant, and thereby save costs for site node located switches. Another advantage with a central switch unit, may be that concentration of switching to the central switch unit enable better utilization of switching capacity. A site located switch may typically not be well utilized, due to requirements to handle peak traffic.

According to another aspect, an arrangement in a network is provided, the arrangement comprising a central filter unit in a central node. The central filter unit comprising an interface for optical connection to a site filter unit arranged in a site node comprising a base station, and an interface for optical connection to a central switch unit in the central node. The central filter unit is arranged for optical connection of the site filter unit with the central switch unit, such that the base station can optically communicate with the central switch unit. The central filter unit guides light waves between the base station and a corresponding port on the interface of the central switch unit, where the light waves are associated with the base station. The central filter unit is arranged to filter optical communication between the site filter unit and the central switch unit. The central switch unit comprises a virtual switch unit that replaces an active network equipment located in the site node, where the virtual switch unit switches data between different units within the site node.

According to another aspect, an arrangement in a network is provided, the arrangement comprising a site filter unit in a site node comprising a base station. The site filter unit comprising an interface for optical connection to the base station, and an interface for optical connection to a central filter unit arranged in a central node. The site filter unit is arranged for optical connection of the central filter unit with the base station, such that the base station can optically communicate with a central switch unit. The site filter unit guides light waves between the base station and a corresponding port on the interface of the central switch unit, where the light waves are associated with the base station. The site filter unit is arranged to filter optical communication between the base station and the central filter unit, where the central switch unit comprises a virtual switch unit that replaces an active network equipment located in the site node, where the virtual switch unit switches data between different units within the site node.

An advantage with an arrangement with a central filter unit and/or a site filter unit, is that passive equipment, such as filter units typically may be cheaper in both acquisition as well as operation and maintenance, compared with active equipment such as switching units. Another advantage related to costs, may be that fact that passive equipment, in the absence of active electronics, may have a longer life time, than active electronics. Thus may replacement intervals be longer for filter units compared with switch units.

The above arrangement, central switch node, central filter node and site filter node may be configured and implemented according to different optional embodiments. In one possible embodiment, the arrangement is the connection between the base station in the site node and the central switch unit a direct optical connection. In another embodiment is the connection between the radio unit in the site node and the digital unit is a direct optical connection. In another embodiment is the connection between any of the units in the site node and the central switch unit or the digital unit associated with the same light wave length through the entire connection. In another embodiment is the connection between any of the units in the site node and the central switch unit or the digital unit associated with different light wave lengths through the connection, and the wave length is shifted by at least one wave length shifting unit. In another embodiment does the site node comprises a plurality of base stations, radio units, and/or other service termination units, all optically connected to the central switch unit or the digital unit and allocated individual wave lengths.

In one possible embodiment the central switch unit may be arranged to connect a plurality of base stations in a site node. In another embodiment is the central switch unit arranged to connect a plurality of site nodes. In another embodiment is the central switch unit arranged to connect a plurality of digital units. In another embodiment is a plurality of base stations and/or radio units associated with the same site unit are connected to a virtual switch unit within the central switch unit. In another embodiment comprises the central switch at least one virtual switch for each type of service.

In one possible embodiment is the central filter unit adapted for connection to a plurality of base stations. In another embodiment is the central filter unit adapted for connection to a plurality of base stations from a plurality of site nodes. In another embodiment is the core filter unit adapted for connection to a data packet switching unit. In another embodiment is arrayed waveguide grating used to separate individual light wave lengths.

In one possible embodiment can a plurality of site filter units be cascade connected, enabling such that a plurality of site nodes becomes cascade connected.

Costs from both acquisition of site node located switches, as well as operation and maintenance of a network for connection of site nodes to a central node, may be advantageously reduced, by optically connecting base stations and other units in a site node to a central node.

Further possible features and benefits of this solution will become apparent from the detailed description below.

### Brief description of drawings

The solution will now be described in more detail by means of exemplary embodiments and with reference to the accompanying drawings, in which:
Fig 1 is a block diagram, according to the prior art.
Fig 2 is a block diagram illustrating an arrangement in a network.
Fig. 3 is a block diagram illustrating a central switch unit and a site switch unit in a network.
Fig. 4 is a block diagram illustrating embodiments of an arrangement in a network, and embodiments of a central switch unit, central filter unit, and site filter unit.

### Detailed description

Briefly described, a solution is provided to enable an optical connection between a base station and a central switch unit. Today's solutions of how to build a mobile access network are technically working. However, with the increasing number of base stations and radio units in a network, for handling of the increasing number of subscribers and data traffic, not only the number of units increase, but also the network complexity. In order to minimize technical complexity and costs, it is a desire to limit the amount of equipment in site nodes. The site node describes the facility where base stations and radio units are located, together with supporting and monitoring equipment.

A more complex access network increases the complexity of the network architecture in terms of network management and configuration, traffic prioritization, fault handling, etc. An example that searching for a fault becomes more difficult in a network with many individual units. Another example is that a network with virtual network paths becomes within the physical network, becomes more complex than a pure physical network. On the other side, the cost of optical networks is however decreasing. It is therefore an object with the described solution to utilize optical networks to move active network equipment from site nodes in the mobile access network, to more central located nodes in the network. By removing active network equipment like switches and routers, and replacing them with passive optical equipment, it is possible to decrease costs of the equipment itself, as well as costs for operations and maintenance. Obviously switching and routing functionality is needed at some point, but by moving the equipment into more central positions, it is possible to aggregate traffic and better utilize traffic capacity in central located equipment over time. With more simple networks architecture follows limitations on operations and maintenance costs.

According to the described solution, various units in a site node are connected to an optical network, where each unit may be associated with an individual wave length. The site node is according to the solution optically connected to a central node in the network, and at the central node switching and routing of data packets, traffic shaping, prioritization, separation, etc, is performed. Thereby it is possible to remove electronic equipment from site nodes and various points in the access network, electronic equipment which is costly itself, costly to configure into the network and has a limited life time. Instead the communication is performed via the passive optical network.

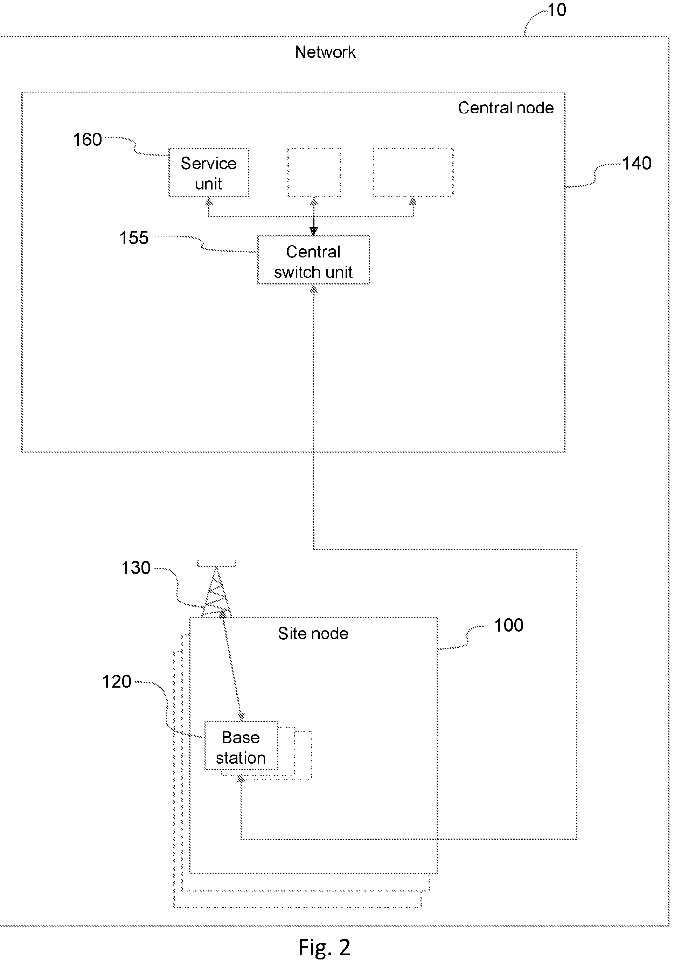

An example of an arrangement in a network will now be described in more detail. Fig. 2 shows a network 10, with a site node 100 and central node 140. The site node 100 comprises a base station 120, and the central node 140 comprises a central switch unit 155 and a service unit 160.

Fig. 2 shows a site node 100, with a base station 120 and related antenna 130. A site node 100 may be exemplified by a small facility within a building, suitable for housing of a base station 120, a facility mounted on a building, e.g. typical on top of the roof of a large building, or a standalone facility, which comprises a base station 120 and an antenna 130, for termination of wireless communication. The site node 100 may also include additional related equipment. Fig. 2 further shows the central node 140. The central node 140 may be located centrally in a network. The central node 140 may also be referred to as central office, main site or core node, to give a few examples. The central switch unit 155 is connected to the base station 120. The central switch unit 155 may be arranged for switching of data packets. Examples of data packets are Ethernet frames, IP packets (Internet Protocol packets), or similar. The central switch unit 155 is connected to the service unit 160. The service unit 160 may be arranged for control of a base station 120, switching of voice traffic, data traffic shaping, or similar core network features.

The connection, shown in Fig. 2, between the base station 120 and the central switch unit 155 is an optical connection, and thereby enabling that communication is carried by light.

As illustrated in Fig. 2, the central switch unit 155 has an interface for connection to the service unit 160, and an interface for connection to the base station 120. The interface for connection to the base station 120 is an optical interface, such that communication is performed by light between the base station 120 and the central switch unit 155.

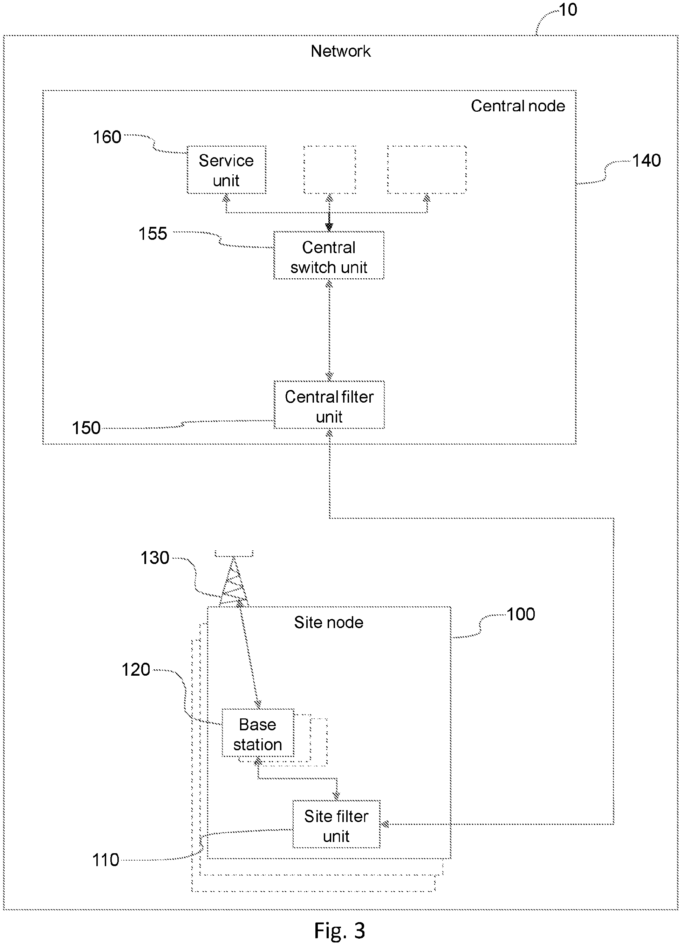

Fig. 3 shows a central filter unit 150 in the central node 140, and a site filter unit 110 in the site node 100.

The site filter unit 110 is arranged to filter the optical communication between the base station 120 and the central filter unit 150. The site filter unit 110 has an interface for optical connection to the base station 120 and an interface for optical connection to the central filter unit 150. The site filter unit 110 is arranged to guide light waves, associated with the base station 120, to a corresponding port on a central switch unit 155.

The central filter unit 150 is arranged to filter optical communication between the site filter unit 110 and the central switch unit 155. The central filter unit 150 has an interface for optical connection to the site filter unit 110 and an interface for optical connection to the central switch unit 155. The central filter unit 150 is arranged to guide light waves, associated with the base station 120, to a corresponding port on a central switch unit 155.

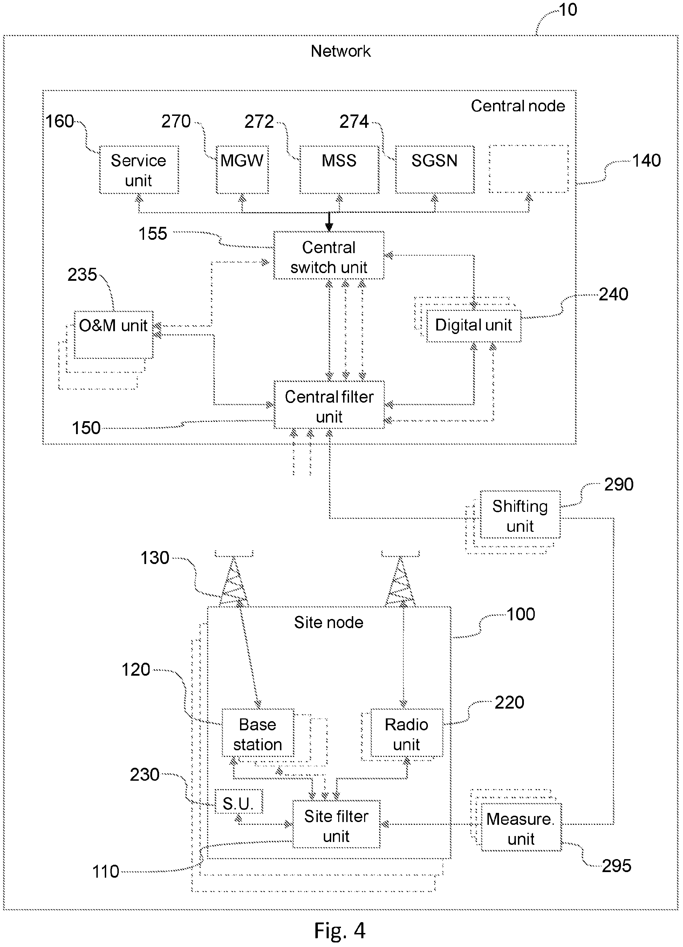

Fig. 4 shows embodiments of an arrangement in a network, embodiments of the site filter unit 110, central filter unit 150 and the central switch unit 155.

According to an exemplifying embodiment, a site node 100 comprises a plurality of base stations 120. A plurality of base stations 120 may serve a larger number of subscribers than a single base station 120, or higher voice and/or data traffic capacity than a single base station 120. A base station 120 has one or more ports for network connection, for provision of redundancy, robustness, etc. Such ports may, as a non-limiting example, be supporting e.g. Ethernet or IP. Each port may be associated with an individual light wave length.

A site node 100 may alternatively or in addition comprise one or a plurality of radio units 220, for termination of wireless communication. A radio unit 220 may also be described with the term remote radio unit, or base band unit, not limiting this description to use of other terms. Such a radio unit 220 is optically connected to the site filter unit 110, via one or a plurality of ports. The plurality of ports for provision of redundancy, robustness, etc. Such connection may be carried by the CPRI-protocol (Common Public Radio Interface). Each port may be associated with an individual light wave length. The other end of the optical communication may be a digitalization unit 240. The digitalization unit 240 may for example convert the digitalized analogue signal to GSM/3G or VoIP.

According to an exemplifying embodiment the site node 100 may comprise a support unit 230, or a plurality of support units 230. Examples of support units 230 are climate control unit in the site node 100, intrusion control unit in the site node 100, alarm monitor unit for monitoring of alarms from other units in the site node 100, power supply unit for power supply to other units in the site node 100, etc, not limiting other functions of a support unit 230. The support unit 230 may be connected to the site filter unit 110 via an optical connection.

The central node 140 may comprise an operation and maintenance unit (O&M) 235. Supporting units 230 may be optically connected to an operation and maintenance unit 235. Supporting units 230 may also be communicating with the operation and maintenance unit 235, connected via the central switch unit 155. For example, different kind of supporting units 230 may be optically connected to different kind of operation and maintenance units 235, possibly via the central switch unit 155. The different kinds of operation and maintenance units 235 may be associated with specific tasks performed by the different kind of supporting units 230.

Different types of units may be associated with different groups of light wave lengths. An example: base stations 120 may be associated with the red spectrum of light waves, radio units 220 may be associated with the green spectrum of light waves, support units 230 may be associated with the blue spectrum of light waves. Alternatively or in addition, units belonging e.g. to different network operators may be associated with different groups of light wave lengths. It is today rather common for competing operators to share site nodes and/or antenna masts, to save costs or by authority requirements. Thereby, different units belonging to a specific operator could be associated with a group of light wave lengths or by other means. An example; all base stations 120, all radio units 220, and all support units 230 owned by the same operator, may be associated to a common light wave group or a spectrum. A plurality of site filter units 110 may be cascade connected. A port on the site filter unit 110 may be allocated for another site filter unit 110. An example is a rural area where one or a plurality of site nodes 100, which are remotely located, are connected to a site node 100, which is located at the access network. The option is to extend the access network with individual connections to the more remotely located site nodes 100, but to the expense of more digging or air lines.

One or more measurement units 295 may be arranged in the optical connection, between the site filter unit 110 and the central filter unit 150. The measurement unit 295 may measure quality of optical signals. The measurement unit 295 may also measure the quality of a part of the communication. The measurement unit 295 may also measure the quality of all signaling on a single fiber, or, the quality of the signals in a plurality of fibers. There are a number of quality parameters which may be measured. It is however known by the person skilled in the art, which parameters that may be measured and therefore not further described in this description.

A shifting unit 290 may be arranged in the optical connection. The shifting unit may be shifting one light wave length to another light wave length. In an embodiment a plurality of shifting units 290 are arranged in the optical network. Such shifting is, however, known to the person skilled in the art, and will therefore not be further described herein.

According to an embodiment, as shown in Fig. 4, is the central filter unit 150 located in the central node 140. The central filter unit 150 may be connected to the site filter unit 110. An example of such connection is a single fiber, carrying a plurality of light wave lengths. Typically, a single fiber may carry up to approximately 80 wave lengths, or up to approximately 480 wave lengths, or a range between 2 and approximately 2 000 wave lengths. The single fiber may as well carry only one wave length. In another embodiment a plurality of fibers are connected to the central filter unit 150, from the site filter unit 110. An advantage with at least two fibers connected to the central filter unit 150, from the site filter unit 110, is that if one fiber is cut off for any reason, the other one may carry the communication.

According to an exemplifying embodiment, a plurality of site filter units 110 are connected to a single central filter unit 150. An example is where a site node 100 comprises a plurality of site filter units 110. Another example is where a plurality of site nodes 100, with a plurality of site filter units 110, are connected to a single central filter unit 150.

The central filter unit 150 may be connected to a central switch unit 155. The central filter unit 150 may also be connected to a digital unit 240. In an embodiment there may be a plurality of central filter units 150 connected to a plurality of central switch units 155. In another embodiment a plurality of central filter units 150 also are connected to a plurality of digital units 240. These should only be seen as examples of various combinations, where the demand for redundancy or capacity will determine the number of units in a solution.

According to an exemplifying embodiment, a plurality of base stations 120 are connected to the central switch unit 155. The communication between the base stations 120 and the central switch unit 155 is optical. The central switch unit 155 may comprise at least one virtual switch unit. A virtual switch unit may replace a switch that traditionally is located in the site node 100. I.e. a virtual switch unit may be switching traffic between different units within a site node 100. An example is switching of data packets between a base station 120 and a support unit 230. Another example is switching of data between two different base stations 120 within the same site node 100. In another embodiment are similar services operated in different site nodes 100 associated to the same virtual switch. An example is VoIP-traffic (Voice-over-Internet Protocol) from base stations 120 in different site nodes 100, directed to and switched in the same virtual switch. Another example is where GPRS (General Packet Radio Service) or HSDPA (High-Speed Downlink Packet Access) traffic from base stations 120 from a plurality of site nodes 100, is switched in the same virtual switch.

According to an exemplifying embodiment, the central switch unit 155 is arranged to switch native Ethernet. The central switch unit 155 may also be arranged to switch Ethernet over VLAN (Virtual Local Area Networks). The central switch unit may also be arranged to switch in accordance with MPLS-switching (Multi Protocol Layer Switching). The central switch unit 155 may also be arranged to act as a router, and route IP (Internet Protocol) packets, according to various static or dynamic routing methods.

According to an exemplifying embodiment, the central switch unit 155 may have sensing capabilities. Such sensing capabilities may be able to detect what kind of protocol that is used by equipment connected to the switch, protocols such as Ethernet, CPRI, or other protocols. The sensing capabilities may also be able to detect equipment of a certain kind or from a certain vendor. The central switch unit 155 may have similar sensing capabilities. The sensing capabilities may, for example, be used to determine if a connection is provided to a desired port or not, to the central switch unit 155. The sensing capabilities may, for example, be used to determine how to automatically switch traffic connected to a port on the central switch unit 155.

Fig. 4 shows the service unit 160. The service unit 160 operates services which are terminated by a base station 120 or a radio unit 220. The service unit 160 is connected to the central switch unit 155. Other units that may be connected to the central switch unit 155. Examples of such units are Mobile Gateway (MGW) 270, and/or Mobile Soft Switch (MSS) 272, and/or Serving GPRS Node (SGSN) 274, not limiting other units or nodes to be connected to the central switch unit 155.

While the solution has been described with reference to specific exemplary embodiments, the description is generally only intended to illustrate the inventive concept and should not be taken as limiting the scope of the solution. For example, the terms "central switch unit", "central filter unit" and "service unit" have been used throughout this description, although any other corresponding nodes, functions, and/or parameters could also be used having the features and characteristics described here. The solution is defined by the appended claims.

## Claims

1. An arrangement in a network (10), the arrangement comprising:
- a site node (100) arranged to comprise a base station (120), the base station (120) being adapted for termination of wireless communication, wherein the site node (100) further comprises active network equipment; and
- a central node (140) arranged to comprise a service unit (160), the service unit (160) being adapted for communication with the base station (120), wherein
- the central node (140) further comprises a central switch unit (155), the central switch unit (155) being adapted for switching of data between the base station (120) and the service unit (160), wherein
- the base station (120) and the central switch unit (155) are optically connected, to enable communication that is carried by light, **characterized in that**
- the central switch unit (155) comprises a virtual switch unit that replaces an active network equipment, among the active network equipment, located in the site node (100), and wherein
- the virtual switch unit switches data between different units within the site node (100).

2. The arrangement according to claim 1, wherein
at least one measurement unit (295) is arranged between the base station (120) and/or a radio unit (220) and the central switch unit (155), for measurement of optical signal quality parameters.

3. The arrangement according to any of claims 1 to 2, wherein
the different units within the site node (100) are associated with different groups of light wave lengths, and wherein the different groups of light wave lengths are associated with different services or operators.

4. A central switch unit (155) in a central node (140) for switching of data, wherein
- the central switch unit (155) is adapted for switching of data between a base station (120) and a service unit (160), wherein
- the central switch unit (155) has an interface for connection to the service unit (160) and an interface for connection to the base station (120), wherein
- the interface for connection to the base station (120) is an optical interface for optical communication with the base station (120), **characterized in that**
- the central switch unit (155) comprises a virtual switch unit that replaces an active network equipment located in a site node (100), and wherein
- the virtual switch unit switches data between different units within the site node (100).

5. The central switch unit (155) according to claim 4, wherein the central switch unit (155) is arranged to connect a plurality of base stations (120) in the site node (100).

6. The central switch unit (155) according to any of claim 4 or 5, wherein the central switch unit (155) is arranged to connect a plurality of site nodes (100).

7. The central switch unit (155) according to any of claims 4 to 6, wherein the central switch unit (155) is arranged to connect a plurality of digital units (240).

8. The central switch unit (155) according to any of claims 4 to 7, wherein
a plurality of base stations (120) and/or radio units (220) associated with a same site node (100) are connected to the virtual switch unit within the central switch unit (155).

9. The central switch unit (155) according any of claims 4 to 8, wherein the central switch unit (155) is a router for routing of Internet packets.

10. An arrangement in a network (10), wherein the arrangement comprises:
- a central filter unit (150) in a central node (140), arranged to comprise:
- an interface for optical connection to a site filter unit (110) arranged in a site node (100) that comprises a base station (120); and
- an interface for optical connection to a central switch unit (155) in the central node (140), wherein
- the central filter unit (150) is arranged for optical connection of the site filter unit (110) with the central switch unit (155), such that the base station (120) optically communicates with the central switch unit (155), wherein
- the central filter unit (150) is further arranged to guide light waves between the base station (120) and a corresponding port on the interface of the central switch unit (155), wherein the light waves are associated with the base station (120), wherein
- the central filter unit (150) is further arranged to filter optical communication between the site filter unit (110) and the central switch unit (155), **characterized in that**
- the central switch unit (155) comprises a virtual switch unit that replaces an active network equipment located in the site node (100), and wherein
- the virtual switch unit switches data between different units within the site node (100).

11. The arrangement according to claim 10, wherein the central filter unit (150) is adapted for connection to a plurality of base stations (120).

12. The arrangement according to any of claims 10 or 11, wherein the central filter unit (150) is adapted for connection to a plurality of base stations (120) from a plurality of site nodes (100).

13. The arrangement according to any of claims 10 to 12, wherein the central filter unit (150) is adapted for connection to a data packet switching unit.

14. An arrangement in a network (10), the arrangement comprising:
- a site filter unit (110) in a site node (100) comprising a base station (120), the site filter unit (110) arranged to comprise:
- an interface for optical connection to the base station (120); and
- an interface for optical connection to a central filter unit (150) arranged in a central node (140), wherein
- the site filter unit (110) is further arranged for optical connection of the central filter unit (150) with the base station (120), such that the base station (120) optically communicates with a central switch unit (155), wherein
- the site filter unit (110) is further arranged to guide light waves between the base station (120) and a corresponding port on the interface of the central switch unit (155), wherein the light waves are associated with the base station (120), wherein
- the site filter unit (110) is further arranged to filter optical communication between the base station (120) and the central filter unit (150), **characterized in that**
- the central switch unit (155) comprises a virtual switch unit that replaces an active network equipment located in the site node (100), and wherein
- the virtual switch unit switches data between different units within the site node (100).

15. The arrangement according to claim 14, wherein a plurality of site filter units (110) is cascade connected, enabling such that a plurality of site nodes (100) becomes cascade connected.

## Patentansprüche

1. Anordnung in einem Netzwerk (10), wobei die Anordnung Folgendes umfasst:
- einen Standortknoten (100), der so angeordnet ist, dass er eine Basisstation (120) umfasst, wobei die Basisstation (120) für die Beendigung von drahtloser Kommunikation ausgelegt ist, wobei der Standortknoten (100) ferner aktive Netzwerkausrüstung umfasst; und
- einen zentralen Knoten (140), der so angeordnet ist, dass er eine Diensteinheit (160) umfasst, wobei die Diensteinheit (160) für die Kommunikation mit der Basisstation (120) ausgelegt ist, wobei
- der zentrale Knoten (140) ferner eine zentrale Vermittlungseinheit (155) umfasst, wobei die zentrale Vermittlungseinheit (155) zum Vermitteln von Daten zwischen der Basisstation (120) und der Diensteinheit (160) ausgelegt ist, wobei
- die Basisstation (120) und die zentrale Vermittlungseinheit (155) optisch verbunden sind, um eine Kommunikation zu ermöglichen, die durch Licht übertragen wird, **dadurch gekennzeichnet ist, dass**
- die zentrale Vermittlungseinheit (155) eine virtuelle Vermittlungseinheit umfasst, die eine aktive Netzwerkausrüstung unter der aktiven Netzwerkausrüstung ersetzt, die sich in dem Standortknoten (100) befindet, und wobei
- die virtuelle Vermittlungseinheit Daten zwischen verschiedenen Einheiten innerhalb des Standortknotens (100) vermittelt.

2. Anordnung nach Anspruch 1, wobei
mindestens eine Messeinheit (295) zwischen der Basisstation (120) und/oder einer Funkeinheit (220) und der zentralen Vermittlungseinheit (155) zum Messen von optischen Signalqualitätsparametern angeordnet ist.

3. Anordnung nach einem der Ansprüche 1 bis 2, wobei
die verschiedenen Einheiten innerhalb des Standortknotens (100) verschiedenen Gruppen von Lichtwellenlängen zugeordnet sind und wobei die verschiedenen Gruppen von Lichtwellenlängen verschiedenen Diensten oder Betreibern zugeordnet sind.

4. Zentrale Vermittlungseinheit (155) in einem zentralen Knoten (140) zum Vermitteln von Daten, wobei
- die zentrale Vermittlungseinheit (155) zum Vermitteln von Daten zwischen einer Basisstation (120) und einer Diensteinheit (160) ausgelegt ist, wobei
- die zentrale Vermittlungseinheit (155) eine Schnittstelle zum Verbinden mit der Diensteinheit (160) und eine Schnittstelle zum Verbinden mit der Basisstation (120) aufweist, wobei
- die Schnittstelle zum Verbinden mit der Basisstation (120) eine optische Schnittstelle zur optischen Kommunikation mit der Basisstation (120) ist, **dadurch gekennzeichnet, dass**
- die zentrale Vermittlungseinheit (155) eine virtuelle Vermittlungseinheit umfasst, die eine aktive Netzwerkausrüstung ersetzt, die sich in einem Standortknoten (100) befindet, und wobei
- die virtuelle Vermittlungseinheit Daten zwischen verschiedenen Einheiten innerhalb des Standortknotens (100) vermittelt.

5. Zentrale Vermittlungseinheit (155) nach Anspruch 4, wobei die zentrale Vermittlungseinheit (155) angeordnet ist, um eine Vielzahl von Basisstationen (120) in dem Standortknoten (100) zu verbinden.

6. Zentrale Vermittlungseinheit (155) nach einem der Ansprüche 4 oder 5, wobei die zentrale Vermittlungseinheit (155) angeordnet ist, um eine Vielzahl von Standortknoten (100) zu verbinden.

7. Zentrale Vermittlungseinheit (155) nach einem der Ansprüche 4 bis 6, wobei die zentrale Vermittlungseinheit (155) angeordnet ist, um eine Vielzahl von digitalen Einheiten (240) zu verbinden.

8. Zentrale Vermittlungseinheit (155) nach einem der Ansprüche 4 bis 7, wobei
eine Vielzahl von Basisstationen (120) und/oder Funkeinheiten (220), die demselben Standortknoten (100) zugeordnet sind, mit der virtuellen Vermittlungseinheit innerhalb der zentralen Vermittlungseinheit (155) verbunden ist.

9. Zentrale Vermittlungseinheit (155) nach einem der Ansprüche 4 bis 8, wobei die zentrale Vermittlungseinheit (155) ein Router zum Routen von Internetpaketen ist.

10. Anordnung in einem Netzwerk (10), wobei die Anordnung Folgendes umfasst:
- eine zentrale Filtereinheit (150) in einem zentralen Knoten (140), die angeordnet ist, um Folgendes zu umfassen:
- eine Schnittstelle zum optischen Verbinden mit einer Standortfiltereinheit (110), die in einem Standortknoten (100) angeordnet ist, der eine Basisstation (120) umfasst; und
- eine Schnittstelle zum optischen Verbinden mit einer zentralen Vermittlungseinheit (155) in dem zentralen Knoten (140), wobei
- die zentrale Filtereinheit (150) zum optischen Verbinden der Standortfiltereinheit (110) mit der zentralen Vermittlungseinheit (155) angeordnet ist, sodass die Basisstation (120) optisch mit der zentralen Vermittlungseinheit (155) kommuniziert, wobei
- die zentrale Filtereinheit (150) ferner so angeordnet ist, dass sie Lichtwellen zwischen der Basisstation (120) und einem entsprechenden Port an der Schnittstelle der zentralen Vermittlungseinheit (155) leitet, wobei die Lichtwellen der Basisstation (120) zugeordnet sind, wobei
- die zentrale Filtereinheit (150) ferner so angeordnet ist, dass sie die optische Kommunikation zwischen der Standortfiltereinheit (110) und der zentralen Vermittlungseinheit (155) filtert, **dadurch gekennzeichnet, dass**
- die zentrale Vermittlungseinheit (155) eine virtuelle Vermittlungseinheit umfasst, die eine aktive Netzwerkausrüstung ersetzt, die sich in dem Standortknoten (100) befindet, und wobei
- die virtuelle Vermittlungseinheit Daten zwischen verschiedenen Einheiten innerhalb des Standortknotens (100) vermittelt.

11. Anordnung nach Anspruch 10, wobei die zentrale Filtereinheit (150) zum Verbinden mit einer Vielzahl von Basisstationen (120) ausgelegt ist.

12. Anordnung nach einem der Ansprüche 10 oder 11, wobei die zentrale Filtereinheit (150) zum Verbinden mit einer Vielzahl von Basisstationen (120) aus einer Vielzahl von Standortknoten (100) ausgelegt ist.

13. Anordnung nach einem der Ansprüche 10 bis 12, wobei die zentrale Filtereinheit (150) zum Verbinden mit einer Datenpaketvermittlungseinheit ausgelegt ist.

14. Anordnung in einem Netzwerk (10), wobei die Anordnung Folgendes umfasst:
- eine Standortfiltereinheit (110) in einem Standortknoten (100), die eine Basisstation (120) umfasst, wobei die Standortfiltereinheit (110) angeordnet ist, um Folgendes zu umfassen:
- eine Schnittstelle zum optischen Verbinden mit der Basisstation (120); und
- eine Schnittstelle zum optischen Verbinden mit einer zentralen Filtereinheit (150), die in einem zentralen Knoten (140) angeordnet ist, wobei
- die Standortfiltereinheit (110) ferner zum optischen Verbinden der zentralen Filtereinheit (150) mit der Basisstation (120) angeordnet ist, sodass die Basisstation (120) optisch mit einer zentralen Vermittlungseinheit (155) kommuniziert, wobei
- die Standortfiltereinheit (110) ferner so angeordnet ist, dass sie Lichtwellen zwischen der Basisstation (120) und einem entsprechenden Port an der Schnittstelle der zentralen Vermittlungseinheit (155) leitet, wobei die Lichtwellen der Basisstation (120) zugeordnet sind, wobei
- die Standortfiltereinheit (110) ferner so angeordnet ist, dass sie die optische Kommunikation zwischen der Basisstation (120) und der zentralen Filtereinheit (150) filtert, **dadurch gekennzeichnet, dass**
- die zentrale Vermittlungseinheit (155) eine virtuelle Vermittlungseinheit umfasst, die eine aktive Netzwerkausrüstung ersetzt, die sich in dem Standortknoten (100) befindet, und wobei
- die virtuelle Vermittlungseinheit Daten zwischen verschiedenen Einheiten innerhalb des Standortknotens (100) vermittelt.

15. Anordnung nach Anspruch 14, wobei eine Vielzahl von Standortfiltereinheiten (110) kaskadenverbunden ist, wodurch ermöglicht wird, dass eine Vielzahl von Standortknoten (100) kaskadenverbunden wird.

## Revendications

1. Disposition dans un réseau (10), la disposition comprenant :
- un nœud de site (100) disposé pour comprendre une station de base (120), la station de base (120) étant conçue pour terminer une communication sans fil, dans laquelle le nœud de site (100) comprend en outre un équipement de réseau actif ; et
- un nœud central (140) disposé pour comprendre une unité de service (160), l'unité de service (160) étant conçue pour communiquer avec la station de base (120), dans laquelle
- le nœud central (140) comprend en outre une unité de commutation centrale (155), l'unité de commutation centrale (155) étant conçue pour commuter des données entre la station de base (120) et l'unité de service (160), dans laquelle
- la station de base (120) et l'unité de commutation centrale (155) sont connectées optiquement, pour permettre une communication qui est portée par la lumière, **caractérisée en ce que**
- l'unité de commutation centrale (155) comprend une unité de commutation virtuelle qui remplace un équipement de réseau actif, parmi l'équipement de réseau actif, situé dans le nœud de site (100), et dans laquelle
- l'unité de commutation virtuelle commute des données entre différentes unités à l'intérieur du nœud de site (100).

2. Disposition selon la revendication 1, dans laquelle
au moins une unité de mesure (295) est disposée entre la station de base (120) et/ou une unité radio (220) et l'unité de commutation centrale (155), pour la mesure de paramètres de qualité de signal optique.

3. Disposition selon l'une quelconque des revendications 1 à 2, dans laquelle
les différentes unités à l'intérieur du nœud de site (100) sont associées à différents groupes de longueurs d'onde lumineuse, et dans laquelle les différents groupes de longueurs d'onde lumineuse sont associés à différents services ou opérateurs.

4. Unité de commutation centrale (155) dans un nœud central (140) pour la commutation de données, dans laquelle
- l'unité de commutation centrale (155) est conçue pour la commutation de données entre une station de base (120) et une unité de service (160), dans laquelle
- l'unité de commutation centrale (155) a une interface de connexion à l'unité de service (160) et une interface de connexion à la station de base (120), dans laquelle
- l'interface de connexion à la station de base (120) est une interface optique de communication optique avec la station de base (120), **caractérisée en ce que**
- l'unité de commutation centrale (155) comprend une unité de commutation virtuelle qui remplace un équipement de réseau actif situé dans un nœud de site (100), et dans laquelle
- l'unité de commutation virtuelle commute des données entre différentes unités à l'intérieur du nœud de site (100).

5. Unité de commutation centrale (155) selon la revendication 4, dans laquelle l'unité de commutation centrale (155) est disposée pour connecter une pluralité de stations de base (120) dans le nœud de site (100).

6. Unité de commutation centrale (155) selon l'une quelconque des revendications 4 ou 5, dans laquelle l'unité de commutation centrale (155) est disposée pour connecter une pluralité de nœuds de site (100).

7. Unité de commutation centrale (155) selon l'une quelconque des revendications 4 à 6, dans laquelle l'unité de commutation centrale (155) est disposée pour connecter une pluralité d'unités numériques (240).

8. Unité de commutation centrale (155) selon l'une quelconque des revendications 4 à 7, dans laquelle
une pluralité de stations de base (120) et/ou d'unités radio (220) associées à un même nœud de site (100) sont connectées à l'unité de commutation virtuelle à l'intérieur de l'unité de commutation centrale (155).

9. Unité de commutation centrale (155) selon l'une quelconque des revendications 4 à 8, dans laquelle l'unité de commutation centrale (155) est un routeur pour le routage de paquets Internet.

10. Disposition dans un réseau (10), dans laquelle la disposition comprend :
- une unité de filtrage centrale (150) dans un nœud central (140), disposée pour comprendre :
- une interface pour une connexion optique à une unité de filtrage de site (110) disposée dans un nœud de site (100) qui comprend une station de base (120) ; et
- une interface pour une connexion optique à une unité de commutation centrale (155) dans le nœud central (140), dans laquelle
- l'unité de filtrage centrale (150) est disposée pour une connexion optique de l'unité de filtrage de site (110) à l'unité de commutation centrale (155), de sorte que la station de base (120) communique optiquement avec l'unité de commutation centrale (155), dans laquelle
- l'unité de filtrage centrale (150) est en outre disposée pour guider les ondes lumineuses entre la station de base (120) et un port correspondant sur l'interface de l'unité de commutation centrale (155), dans laquelle les ondes lumineuses sont associées à la station de base (120), dans laquelle
- l'unité de filtrage centrale (150) est en outre disposée pour filtrer une communication optique entre l'unité de filtrage de site (110) et l'unité de commutation centrale (155), **caractérisée en ce que**
- l'unité de commutation centrale (155) comprend une unité de commutation virtuelle qui remplace un équipement de réseau actif situé dans le nœud de site (100), et dans laquelle
- l'unité de commutation virtuelle commute des données entre différentes unités à l'intérieur du nœud de site (100).

11. Disposition selon la revendication 10, dans laquelle l'unité de filtrage centrale (150) est conçue pour une connexion à une pluralité de stations de base (120).

12. Disposition selon l'une quelconque des revendications 10 ou 11, dans laquelle l'unité de filtrage centrale (150) est conçue pour une connexion à une pluralité de stations de base (120) à partir d'une pluralité de nœuds de site (100).

13. Disposition selon l'une quelconque des revendications 10 à 12, dans laquelle l'unité de filtrage centrale (150) est conçue pour une connexion à une unité de commutation de paquets de données.

14. Disposition dans un réseau (10), la disposition comprenant :
- une unité de filtrage de site (110) dans un nœud de site (100) comprenant une station de base (120), l'unité de filtrage de site (110) étant disposée pour comprendre :
- une interface pour une connexion optique à la station de base (120) ; et
- une interface pour une connexion optique à une unité de filtrage centrale (150) disposée dans un nœud central (140), dans laquelle
- l'unité de filtrage de site (110) est en outre disposée pour une connexion optique de l'unité de filtrage centrale (150) à la station de base (120), de sorte que la station de base (120) communique optiquement avec une unité de commutation centrale (155), dans laquelle
- l'unité de filtrage de site (110) est en outre disposée pour guider les ondes lumineuses entre la station de base (120) et un port correspondant sur l'interface de l'unité de commutation centrale (155), dans laquelle les ondes lumineuses sont associées à la station de base (120), dans laquelle
- l'unité de filtrage de site (110) est en outre disposée pour filtrer une communication optique entre la station de base (120) et l'unité de filtrage centrale (150), **caractérisée en ce que**
- l'unité de commutation centrale (155) comprend une unité de commutation virtuelle qui remplace un équipement de réseau actif situé dans le nœud de site (100), et dans laquelle
- l'unité de commutation virtuelle commute des données entre différentes unités à l'intérieur du nœud de site (100).

15. Disposition selon la revendication 14, dans laquelle une pluralité d'unités de filtrage de site (110) est connectée en cascade, permettant de sorte qu'une pluralité de nœuds de site (100) devient connectée en cascade.
